# EUROPÄISCHE PATENTANMELDUNG

(11) **EP 1 281 567 A2**
(43) Veröffentlichungstag der Anmeldung: **05.02.2003**
(21) Anmeldenummer: 02014679.1
(22) Anmeldetag: 03.07.2002
(51) Int. Cl.: B60N 3/10

(54) **Getränkehalter**

(30) Priorität: 01.08.2001 DE 10137533
(71) Anmelder: fischer automotive systems GmbH, 72160 Horb (DE); DaimlerChrysler AG, 70546 Stuttgart (DE)
(72) Erfinder: Dieringer, Jürgen, 78662 Herrenzimmern (DE); Leopold, Gunter, 72270 Baiersbronn (DE); Bieck, Torsten, 72178 Waldachtal (DE); Plocher, Bernd, 72108 Rottenburg (DE)

(57) **Zusammenfassung**

Die Erfindung betrifft einen Getränkehalter (10) für einen Getränkebehälter wie beispielsweise eine Getränkedose, eine Tasse oder einen Becher, der zum Einbau in ein Armaturenbrett eines Kraftwagens vorgesehen ist. Der Getränkehalter (10) weist einen schubladenartig verschiebbar geführten Auszug (14) mit einer Einstellöffnung (32) für den Getränkebehälter auf. Zur Anpassung an einen vorgegebenen Bauraum schlägt die Erfindung vor, den Getränkehalter (10) kreisbogenförmig und mit einer kreisbogenförmigen Schiebeführung auszubilden und zur kippsicheren Abstützung eines eingestellten Getränkebehälters eine um 180° drehbare Abstützung (34) vorzusehen.

## Beschreibung

Die Erfindung betrifft einen Getränkehalter mit den Merkmalen der Oberbegriffe der Ansprüche 1, 2 oder 12.

Derartige Getränkehalter sind an sich bekannt, sie sind zum Einbau beispielsweise in ein Armaturenbrett eines Kraftwagens vorgesehen. Die bekannten Getränkehalter weisen einen Auszug auf, der mit einer Schiebeführung schubladenartig zwischen einer eingeschobenen Nichtgebrauchsstellung und einer ausgefahrenen Gebrauchsstellung hin- und herschiebbar geführt ist. In der eingeschobenen Nichtgebrauchsstellung ist der Auszug im Armaturenbrett des Kraftwagens versenkt, er schließt insbesondere mit einer Blende bündig mit dem Armaturenbrett ab. In der ausgefahrenen Gebrauchsstellung steht der Auszug aus dem Armaturenbrett vor. Der Auszug weist eine oder mehrere Einstellöffnungen zum Einstellen eines Getränkebehälters auf, die in der ausgefahrenen und aus dem Armaturenbrett vorstehenden Gebrauchsstellung des Auszugs zugänglich und zum Einstellen des Getränkebehälters nutzbar ist. Getränkebehälter können beispielsweise eine Getränkedose, eine Tasse, ein Becher oder dgl. sein.

Der Erfindung liegt die Aufgabe zu Grunde, einen Getränkehalter der vorstehend erläuterten Art an einen vorgegebenen Einbauraum in und hinter einem Armaturenbrett anzupassen.

Diese Aufgabe wird erfindungsgemäß durch die Merkmale der Ansprüche 1, 2 und 12 gelöst. Die Schiebeführung für den Auszug des erfindungsgemäßen Getränkehalters mit den Merkmalen der Ansprüche 1, 2 oder 12 ist als Bogenführung ausgebildet. Ein Verschiebeweg des Auszugs beim Ausfahren verläuft ausgehend von der eingeschobenen Nichtgebrauchsstellung des Auszugs zunächst nach oben oder auch schräg nach oben. Im weiteren Verlauf der Ausfahrbewegung geht die Verschieberichtung des Auszugs durch die Bogenführung zunehmend in eine Horizontale über. Dabei muss die Verschieberichtung auch beim Erreichen der vollständig ausgefahrenen Gebrauchsstellung des Auszugs nicht ausschließlich horizontal verlaufen, sondern die Verschieberichtung des Auszugs kann auch am Ende der Ausfahrbewegung in einem Winkel zu einer horizontalen Richtung verlaufen. Die zur Erläuterung der Erfindung verwendeten, Raumrichtungen bezeichnenden Begriffe wie "oben", "Horizontale" oder "Vertikale" sind in Bezug auf eine vorgesehene Einbaulage des Getränkehalters zu verstehen.

Durch die erfindungsgemäße Bogenführung des Auszugs ist ein Platzbedarf des Getränkehalters in einer gedachten in etwa horizontalen Ebene oder einer in etwa zum Armaturenbrett senkrechten Richtung im bzw. hinter dem Armaturenbrett verkürzt. Selbstverständlich muss ein Einbauraum für den Getränkehalter bogenförmig nach unten gerichtet hinter dem Armaturenbrett zur Verfügung stehen. Durch seine Bogenführung ist der erfindungsgemäße Getränkehalter an einen vorgegebenen Einbauraum hinter einem Armaturenbrett eines Kraftwagens angepasst.

Durch die Bogenführung fällt der Auszug des erfindungsgemäßen Getränkehalters nach hinten ab, wobei hinten in Bezug auf die Ausfahrbewegung des Auszugs gemeint ist. Dies hat zur Folge, dass eine Höhe der Einstellöffnung für den Getränkebehälter in einem rückwärtigen Bereich der Einstellöffnung verringert ist, wobei mit rückwärtigem Bereich ein in der ausgefahrenen Gebrauchsstellung des Auszugs dem Armaturenbrett zugewandter, in Ausfahrrichtung des Auszugs hinten befindlicher Bereich der Einstellöffnung gemeint ist. Um einen eingestellten Getränkebehälter zuverlässig und in ausreichender Höhe gegen Kippen abzustützen, sieht Anspruch 1 eine Abstützung mit einer Drehlagerung für einen in die Einstellöffnung eingestellten Getränkebehälter vor. Eine Drehachse der Drehlagerung verläuft in der Gebrauchsstellung des Auszugs in etwa vertikal oder gegenüber einer Vertikalen in Ausfahrrichtung nach vorn geneigt. Zum Einstellen eines Getränkebehälters in die Einstellöffnung wird die Abstützung bei in die Gebrauchsstellung ausgefahrenem Auszug nach hinten in den rückwärtigen Bereich der Einstellöffnung gedreht. Die nach hinten gedrehte Abstützung steht nach oben über den Auszug vor und stützt einen in die Einstellöffnung eingestellten Getränkebehälter im rückwärtigen Bereich der Einstellöffnung oberhalb des Auszugs ab. Durch die nach hinten gedrehte Abstützung wird der eingestellte Getränkebehälter zuverlässig gegen Umkippen abgestützt und gehalten. Weiterer Vorteil der drehbaren Abstützung ist, dass er eine seitliche Verbreiterung der Einstellöffnung ermöglicht. Durch die drehbare Abstützung lässt sich ein Durchmesser der Einstellöffnung über eine Breite des Auszugs hinaus vergrößern.

Anspruch 2 sieht eine Abstützung vor, die aus einer Nichtstützstellung in eine Stützstellung bewegbar ist. In der Stützstellung befindet sich die Abstützung in einem rückwärtigen Teil eines Umfangsbereichs der Einstellöffnung oberhalb des Auszugs. Die Abstützung stützt einen in die Einstellöffnung eingestellten Getränkebehälter im rückwärtigen Bereich der Einstellöffnung oberhalb des Auszugs ab, so dass der in die Einstellöffnung eingestellte Getränkebehälter kippsicher gehalten ist. Die Abstützung stützt einen in die Einstellöffnung eingestellten Getränkebehälter also in demjenigen Umfangsbereich, in dem die Höhe der Einstellöffnung im Auszug durch dessen Bogenführung verringert ist. In einer Nichtstützstellung ist die Abstützung im Auszug versenkt, womit gemeint ist, dass die Abstützung nicht seitlich, nach oben oder unten über den Auszug vorsteht. Auch bei dieser Ausführungsform der Erfindung ist es möglich, die Abstützung beim Bewegen in die Stützstellung zur Seite nach außen zu bewegen, um einen Durchmesser der Einstellöffnung über eine Breite des Auszugs hinaus zu vergrößern.

Die sich in die Stützstellung nach oben bewegende Abstützung gemäß Anspruch 2 und die sich drehende Abstützung nach Anspruch 1 können jeweils für sich oder auch gemeinsam an einem Getränkehalter verwirklicht sein. Letzteres ist Gegenstand des Anspruchs 3.

Die Bogenführung des Auszugs ist nicht zwingend kreisbogenförmig, eine bevorzugte Ausgestaltung der Erfindung sieht allerdings eine Kreisbogenführung als Schiebeführung für den Auszug vor. Eine Kreisbogenführung ermöglicht eine Schiebeführung des insbesondere ebenfalls kreisbogenförmig ausgebildeten Auszugs in einem kreisbogenförmigen Gehäuse.

Eine bevorzugte Ausgestaltung der Erfindung sieht einen mechanischen Antrieb für die Abstützung vor, der die Abstützung beim Ausfahren und/oder beim Einschieben des Auszugs dreht. Angetrieben wird der mechanische Antrieb durch die Verschiebebewegung des Auszugs. Der Antrieb kann eine Kurvensteuerung zu seinem Antrieb aufweisen.

Bei einer Weiterbildung der Erfindung ist ein Schwenkhebel als Bestandteil des Antriebs vorgesehen, der beim Ausfahren und/oder beim Einschieben des Auszugs verschwenkt wird und der mit der drehbaren Abstützung in Eingriff steht und bei seinem Verschwenken die Abstützung dreht. Geschwenkt wird der Schwenkhebel beim Ausfahren und/oder beim Einschieben des Auszugs durch die Kurvensteuerung.

Eine Ausgestaltung der Erfindung sieht eine Schwenklagerung für die Abstützung am Auszug vor, um die Abstützung aus der Nichtstützstellung in die Stützstellung und umgekehrt beweglich am Auszug zu führen. Eine Weiterbildung sieht eine schräge Schwenkachse der Schwenklagerung vor. Die Schwenkachse ist so angeordnet, dass die Abstützung beim Bewegen aus der Nichtstützstellung in die Stützstellung bezüglich des Auszugs sowohl nach oben als auch zur Seite nach außen schwenkt. Dadurch wird sowohl die Stützhöhe im rückwärtigen Bereich der Einstellöffnung erhöht, um einen in die Einstellöffnung eingestellten Getränkbehälter kippsicher zu halten, als auch die Einstellöffnung verbreitert. Die Verbreiterung der Einstellöffnung ermöglicht eine Vergrößerung des Durchmessers der Einstellöffnung über die Breite des Auszugs hinaus.

In bevorzugter Ausgestaltung weist der erfindungsgemäße Getränkehalter einen mechanischen Antrieb für die Abstützung auf, der beim Ausfahren des Auszugs in die Gebrauchsstellung die Abstützung nach oben und ggf. zur Seite nach außen in die Stützstellung und/oder der beim Einfahren des Auszugs in die Nichtgebrauchsstellung die Abstützung nach unten und ggf. innen in die im Auszug versenkte Nichtstützstellung bewegt. Der mechanische Antrieb kann bspw. ein Federelement aufweisen, welches die Abstützung in die Stützstellung drückt. Beim Aus- und Einfahren des Auszugs gleitet die Abstützung bspw, an einem Rand eines Gehäuses, in dem der Auszug verschiebbar geführt ist, entlang, so dass sich die Abstützung beim Ausfahren des Auszugs in die Gebrauchsstellung federbetätigt in die Stützstellung und beim Einfahren des Auszugs in die im Auszug versenkte Nichtstützstellung bewegt. Diese Ausgestaltung der Erfindung hat den Vorteil, dass sich die Abstützung selbsttätig bewegt.

Eine Weiterbildung der Erfindung sieht zwei Abstützungen vor, die sich beide in die Stützstellung nach oben und zu verschiedenen Seiten nach außen bewegen. Diese Ausgestaltung der Erfindung ermöglicht eine größere Verbreiterung der Einstellöffnung durch das Bewegen der Abstützungen in die Stützstellung und damit einen schmaler bauenden Auszug und Getränkehalter bei einem vorgegebenen Durchmesser der Einstellöffnung.

Anspruch 12 sieht eine zunehmende Dämpfung des Auszugs zum Ende der Ausfahrbewegung hin vor. Die Dämpfung kann beispielsweise sprungartig vor Erreichen der vollständig ausgefahrenen Gebrauchsstellung des Auszugs oder auch stetig (progressiv), linear oder nicht-linear über den gesamten oder einen Abschnitt am Ende der Ausfahrbewegung zunehmen.

Die zunehmende Dämpfung am Ende der Ausfahrbewegung des Auszugs hat folgenden Zweck: Durch die Bogenführung des Auszugs verläuft die Ausfahrbewegung zu Beginn senkrecht oder steil nach oben und am Ende der Ausfahrbewegung flach oder sogar horizontal. Ein der Ausfahrbewegung entgegenwirkender Einfluss der Schwerkraft nimmt deswegen während der Ausfahrbewegung des Auszugs ab. Dies hat zur Folge, dass bei einem federbetätigten Ausfahren des Auszugs der Auszug am Ende der Ausfahrbewegung beschleunigt und dadurch am Ende der Ausfahrbewegung hart anschlägt. Die Beschleunigung während des Ausfahrens des Auszugs wird dadurch verstärkt, dass eine Reibung der Schiebeführung während des Ausfahrens des Auszugs abnimmt, da eine Führungslänge, auf der der Auszug verschiebbar geführt ist, mit fortschreitendem Ausfahren und damit mit zunehmendem Vorstehen des Auszugs beispielsweise aus einem Gehäuse des Getränkehalters oder dem Armaturenbrett des Kraftwagens abnimmt. Die zum Ende der Ausfahrbewegung des Auszugs hin zunehmende Dämpfung verringert oder verhindert ein hartes Anstoßen des Auszugs am Ende seiner Ausfahrbewegung an einem Endanschlag oder dgl. der Schiebeführung. Die zum Ende der Ausfahrbewegung des Auszugs hin zunehmende Dämpfung kann unabhängig oder gemeinsam mit der oben erläuterten drehbaren Abstützung für einen in die Einstellöffnung des Auszugs eingestellten Getränkebehälter an Ausgestaltungen des erfindungsgemäßen Getränkehalters verwirklicht sein.

Die zum Ende der Ausfahrbewegung des Auszugs hin zunehmende Dämpfung wird bei einer Ausgestaltung der Erfindung mit einem Dämpferelement erreicht, das erst gegen Ende der Ausfahrbewegung des Auszugs wirksam wird. Dies lässt sich dadurch erreichen, dass beispielsweise ein Zahnrad eines Dämpferelements erst gegen Ende der Ausfahrbewegung des Auszugs mit einer Zahnstange in Eingriff kommt. Auch ist es möglich, die Drehbewegung der drehbaren Abstützung oder das Schwenken des die Abstützung drehenden Schwenkhebels zu dämpfen, wenn die Abstützung erst gegen Ende der Ausfahrbewegung des Auszugs gedreht und der Schwenkhebel erst gegen Ende der Ausfahrbewegung des Auszugs geschwenkt wird. Da der mechanische Antrieb zur Drehung der Abstützung seine Bewegung von der Verschiebung des Auszugs ableitet wirkt die Dämpfung der Drehung der Abstützung bzw. des Schwenkhebels auf die Ausfahrbewegung des Auszugs zurück und dämpft die Ausfahrbewegung des Auszugs am Ende des Ausfahrwegs. Zusätzlich zum beschriebenen Dämpferelement, das erst gegen Ende der Ausfahrbewegung des Auszugs wirksam wird, kann ein Dämpferelement vorgesehen sein, das die Ausfahrbewegung des Auszugs über dessen gesamten Verschiebeweg dämpft.

Die Erfindung wird nachfolgend anhand in der Zeichnung dargestellter Ausführungsbeispiele näher erläutert. Es zeigen:
- Figur 1: eine perspektivische Darstellung eines erfindungsgemäßem Getränkehalters mit Ausbrechungen schräg von oben;
- Figur 2: eine perspektivische und größere Bruchteildarstellung des Getränkehalters aus Figur 1 schräg von unten;
- Figur 3: eine Draufsicht auf den Getränkehalter aus Figur 1;
- Figur 4: einen Längsschnitt des Getränkehalters aus Figur 1 entlang Linie IV-IV in Figur 3;
- Figur 5: ein zweites Ausführungsbeispiel eines erfindungsgemäßen Getränkehalters in einer Figur 1 entsprechenden Darstellung; und
- Figur 6: einen Auszug des Getränkehalters aus Figur 5 mit Ausbrechungen in einer Figur 5 entsprechenden Darstellung.

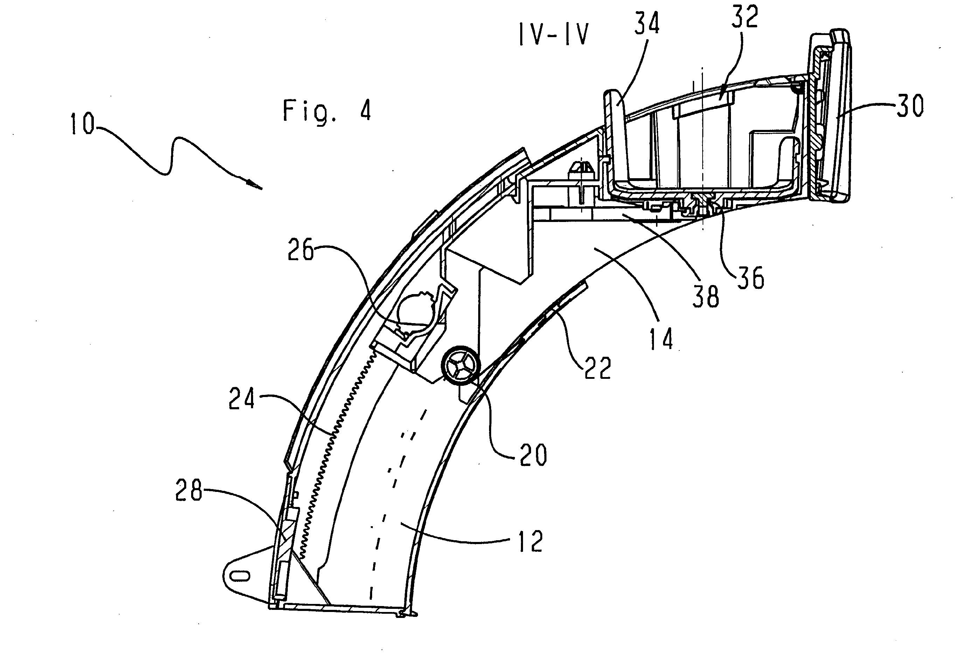

Der in der Zeichnung dargestellte, erfindungsgemäße Getränkehalter 10 ist zum Einbau in ein Armaturenbrett eines nicht dargestellten Kraftwagens vorgesehen. Er weist ein in Seitenansicht (Figur 4) kreisbogenförmiges Gehäuse 12 und einen ebenfalls kreisbogenförmigen Auszug 14 auf. Das Gehäuse 12 hat einen Rechteckrohrquerschnitt und erstreckt sich über einen Kreisbogen von ungefähr 50 bis 60°. Der Auszug 14 weist einen Rechteckquerschnitt auf und erstreckt sich ebenfalls über einen Kreisbogen von ungefähr 50 bis 60°. Das Gehäuse 12 weist seitliche, kreisbogenförmig verlaufende Führungsnuten 16 auf, in denen seitlich am Auszug 14 angeordnete, kreisbogenförmige Führungsschienen 18 verschiebbar einliegen. Das Gehäuse 12 bildet eine kreisbogenförmige Schiebeführung für den Auszug 14, der schubladenartig aus einer nicht dargestellten, in das Gehäuse 12 eingeschobenen Nichtgebrauchsstellung in die in der Zeichnung dargestellte, ausgefahrene Gebrauchsstellung und umgekehrt verschiebbar geführt ist. In einer vorgesehenen, in Figur 4 sichtbaren Einbaulage des Getränkehalters 10 verläuft ein kreisbogenförmiger, durch die Schiebeführung vorgegebener Verschiebeweg des Auszugs 14 ausgehend von der in das Gehäuse 12 eingeschobenen Nichtgebrauchsstellung zunächst steil, d. h. mit großer Vertikalkomponente, nach oben. Durch die Kreisbogenführung flacht die Verschieberichtung über den Ausfahrweg des Auszugs 14 zunehmend in Richtung einer Horizontalen ab.

Das Ausfahren des Auszugs 14 in die Gebrauchsstellung erfolgt federbetätigt mittels einer Rollfeder 20. Die Rollfeder 20 ist eine Bandfeder, die sich aufgrund ihrer Elastizität selbsttätig aufwickelt. Die Rollfeder 20 ist also ein Zugfederelement. Ein Wickel der Rollfeder 20 ist drehbar in einem hinteren Bereich des Auszugs 14 gehalten. Ein abgerolltes Ende 22 der Rollfeder 20 ist nahe einem vorderen Ende des Gehäuses 12 an dessen Boden befestigt. Durch ihre elastische Zugkraft verschiebt die Rollfeder 20 den Auszug 14 in die dargestellte, aus dem Gehäuse 12 vorstehende Gebrauchsstellung.

Eine Ausfahrbewegung des Auszugs 14 wird von einem an sich bekannten Rotationsdämpfungselement gedämpft, dessen Zahnrad mit einer kreisbogenförmig in einer Seitenwand des Gehäuses 12 angeordneten Zahnstange 24 kämmt. Der Rotationsdämpfer selbst ist in der Zeichnung der klaren Darstellung wegen nicht dargestellt, es ist lediglich eine näherungsweise kreisförmige Aussparung 26 zum Einsetzen des Rotationsdämpfers in einer Seitenwand des Auszugs 14 in Figur 4 zu sehen. In der in das Gehäuse 12 eingeschobenen Grundstellung wird der Auszug 14 gegen die Kraft der Rollfeder 20 von einer an sich bekannten, sog. Herzkurven-Verriegelungsmechanik gehalten. Von der Herzkurven-Verriegelungsmechanik ist in der Zeichnung ein Schwenkhebel 28 erkennbar. Durch kurzen Druck von vorn gegen eine Blende 30 des Auszugs 14 in der in das Gehäuse 12 eingeschobenen Nichtgebrauchsstellung wird die Herzkurven-Verriegelungsmechanik entriegelt und der Auszug 14 fährt federbetätigt in die dargestellte Gebrauchsstellung aus.

In seinem vorderen, in der aus dem Gehäuse 12 ausgefahrenen Gebrauchsstellung aus dem Gehäuse 12 vorstehenden Bereich weist der Auszug 14 eine zylinderförmige Ausnehmung auf, die eine Einstellöffnung 32 zum Einstellen eines nicht dargestellten Getränkebehälters bildet. Ein solcher Getränkebehälter kann beispielsweise eine Getränkedose, eine Tasse oder ein Becher sein. In der Gebrauchsstellung des Auszugs 14 verläuft eine gedachte Achse der Einstellöffnung 32 vertikal. Die Aussparung des Auszugs 14 bildet einen Teil der Einstellöffnung 32, sie wird von einer Abstützung 34 mit zylinderförmiger Seitenwand zur vollständigen Einstellöffnung 32 ergänzt. Die Abstützung 34 ist konzentrisch zur Einstellöffnung 32 angeordnet. Die Abstützung 34 weist eine als Zapfenlager ausgebildete Drehlagerung 36 auf, mit der die Abstützung 34 um eine gedachte, zur Einstellöffnung 32 koaxiale Drehachse drehbar in der Einstellöffnung 32 gelagert ist. In der dargestellten Gebrauchsstellung des Auszugs 14 verläuft die gedachte Drehachse der Drehlagerung 36 vertikal. In der dargestellten Drehstellung der Abstützung 34 steht diese in einem rückwärtigen Bereich der Einstellöffnung 32 nach oben über den Auszug 14 vor. Die Abstützung 34 hat den Zweck, einen in die Einstellöffnung 32 eingestellten Getränkebehälter im rückwärtigen Bereich der Einstellöffnung 32 in ausreichender Höhe abzustützen, um ihn kippsicher in der Einstellöffnung 32 zu halten. Durch die bogenförmige Ausführung des Auszugs 14, die ihrerseits durch die kreisbogenförmige Schiebeführung bedingt ist, weist der Auszug 14 wie in Figur 4 erkennbar im rückwärtigen Bereich der Einstellöffnung 32 eine verringerte Tiefe der Einstellöffnung auf, die für ein zuverlässig kippsicheres Halten eines eingestellten Getränkebehälters nicht ausreichen würde. Deswegen ist die in der dargestellten Drehstellung im rückwärtigen Bereich der Einstellöffnung 32 nach oben über den Auszug 14 vorstehende Abstützung 34 vorgesehen.

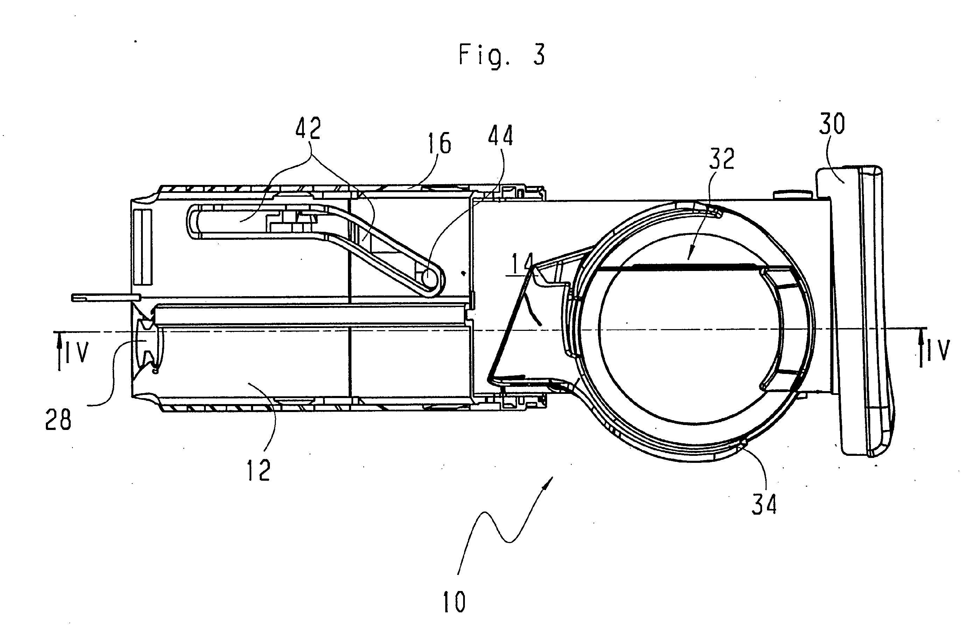

Bei Nichtgebrauch wird die Abstützung 34 um ca. 180° gedreht (nicht dargestellt), so dass die Abstützung 34 im Auszug 14 versenkt und der Auszug 14 in das Gehäuse 12 einschiebbar ist. Durch die drehbare Abstützung 34 ist somit eine Verringerung der Bauhöhe des Getränkehalters 10 bei einer vorgegebenen Tiefe der Einstellöffnung 32 möglich. Zudem ermöglicht die drehbare Abstützung 34 einen größeren Durchmesser der Einstellöffnung 32 als der Auszug 14 breit ist, da, wie insbesondere in Figur 3 zu sehen ist, die Abstützung 34 in der dargestellten Drehstellung auf einer Seite seitlich über den Auszug 14 vorsteht. Wird die Abstützung 34 bei Nichtgebrauch um 180° gedreht, versinkt sie auch in seitlicher Richtung vollständig im Auszug 14, steht also seitlich nicht über den Auszug 14 über.

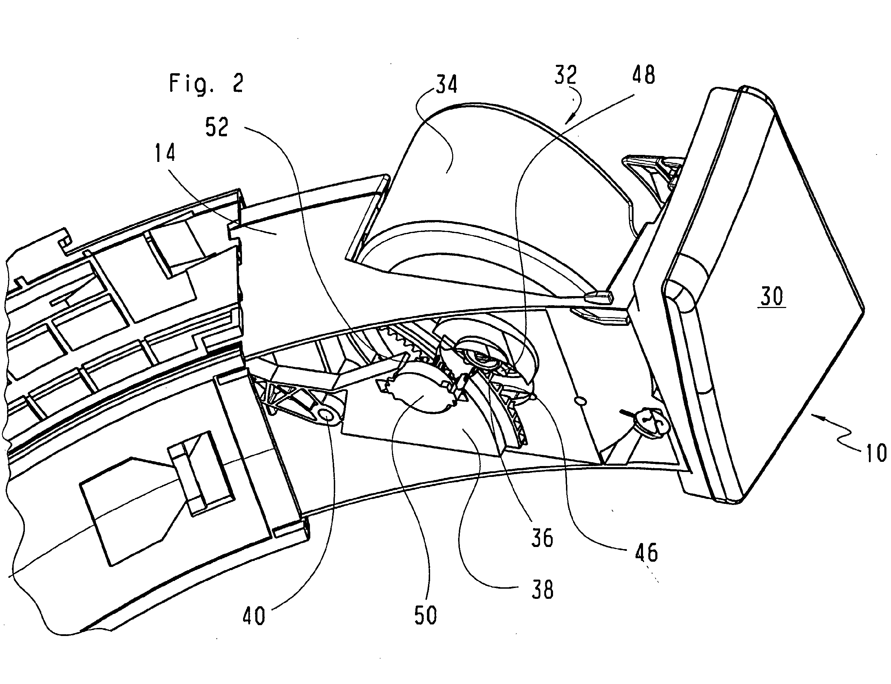

Zum Drehen der Abstützung 34 weist der erfindungsgemäße Getränkehalter 10 einen mechanischen Antrieb auf: Der mechanische Antrieb weist einen Schwenkhebel 38 auf, der an einer Unterseite des Auszugs 14 angeordnet und um einen Zapfen 40 schwenkbar am Auszug 14 gelagert ist (Figur 2). Eine Schwenkbewegung des Schwenkhebels 38 wird von der Verschiebebewegung des Auszugs 14 abgeleitet: Zum Schwenken des Schwenkhebels 38 weist der mechanische Antrieb eine Kurvensteuerung mit einer Kulissenbahn 42 auf, in der ein Kulissenzapfen 44 verschiebbar einliegt, der einstückig von einem hinteren, der Abstützung 34 fernen Ende des Schwenkhebels 38 nach oben absteht. Die Kulissenbahn 42 verläuft in Ausfahrrichtung des Auszugs 14 zunächst parallel zu Seitenwänden des Gehäuses 12 an einer Seite des Gehäuses 12. Anschließend geht die Kulissenbahn 42 in einen schräg zum Gehäuse 12 verlaufenden Abschnitt über. Beim Ausfahren des Auszugs 14 aus dem Gehäuse 12 verschiebt sich der Kulissenzapfen 44 in der Kulissenbahn 42. Im schräg zum Gehäuse 12 verlaufenden Abschnitt der Kulissenbahn 42 wird der Kulissenzapfen 44 quer zum Auszug 14 bewegt und verschwenkt dadurch den Schwenkhebel 38. Eine Verzahnung 46 am vorderen, der Abstützung 34 zugewandten Ende des Schwenkhebels 38, die mit einer Gegenverzahnung 48 der Abstützung 34 kämmt, dreht beim beschriebenen Schwenken des Schwenkhebels 38 die Abstützung 34 um ungefähr 180° in die in der Zeichnung dargestellte Drehstellung. Beim Einschieben des Auszugs 14 in das Gehäuse 12 dreht der Schwenkhebel 38 die Abstützung 34 um 180° zurück in eine nicht dargestellte Drehstellung, in der die Abstützung 34 sowohl oben als auch seitlich im Auszug 14 versenkt ist und nicht übersteht.

In den Auszug 14 ist ein Rotationsdämpfer 50 eingesetzt, dessen Zahnrad mit einer Verzahnung 52 des Schwenkhebels 38 kämmt. Der Rotationsdämpfer 50 dämpft die Schwenkbewegung des Schwenkhebels 38. Über die Kurvensteuerung 42, 44, die den Schwenkhebel 38 beim Verschieben des Auszugs 14 verschwenkt, wirkt eine Dämpfungswirkung des Rotationsdämpfers 50 auf die Verschiebung des Auszugs 14 zurück, der Rotationsdämpfer 50 dämpft auch die Verschiebebewegung des Auszugs 14. Da der Schwenkhebel 38 wie beschrieben erst gegen Ende der Ausfahrbewegung des Auszugs 14 verschwenkt wird, ist auch der Rotationsdämpfer 50 nur gegen Ende der Ausfahrbewegung des Auszugs 14 wirksam und dämpft die Ausfahrbewegung erst vor Erreichen der aus dem Gehäuse 12 ausgefahrenen Gebrauchsstellung. Die Dämpfung der Verschiebung des Auszugs 14 am Ende der Ausfahrbewegung wirkt einer Beschleunigung des Auszugs 14 beim Ausfahren entgegen, die durch eine nachlassende, der Ausfahrbewegung entgegenwirkende Schwerkraftwirkung aufgrund der durch die Bogenführung zunehmend abflachende Ausfahrrichtung des Auszugs 14 bewirkt wird. Außerdem lässt eine Reibung der Schiebeführung des Auszugs 14 im Gehäuse 12 nach, wenn der Auszug 14 beim Ausfahren zunehmend weiter aus dem Gehäuse 12 vorsteht und dadurch auf einer sich verkürzenden Führungslänge im Gehäuse 12 geführt ist. Auch dies führt zu einer Beschleunigung der Ausfahrbewegung des Auszugs 14, wenn die Dämpfung der Ausfahrbewegung nicht zunimmt.

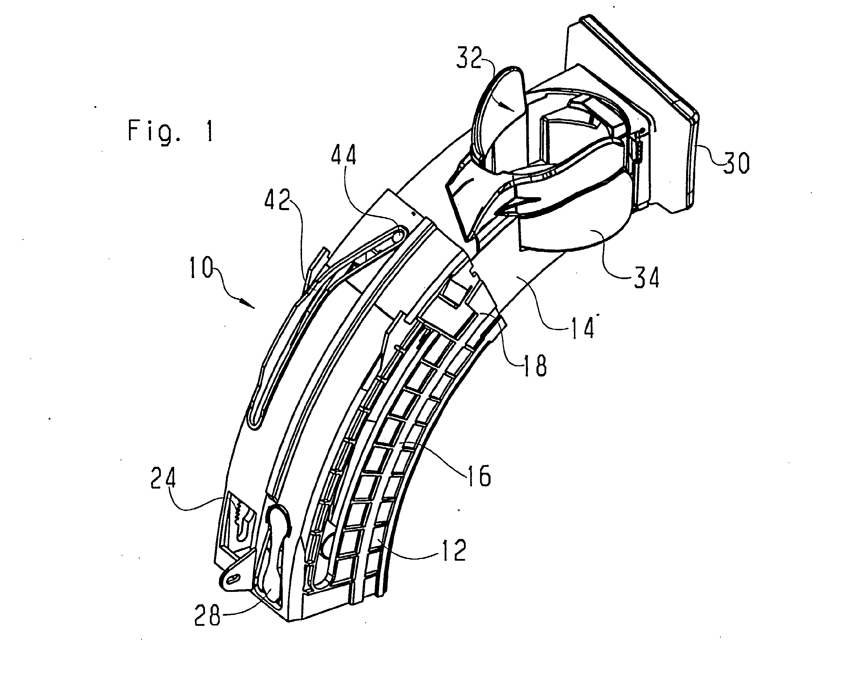

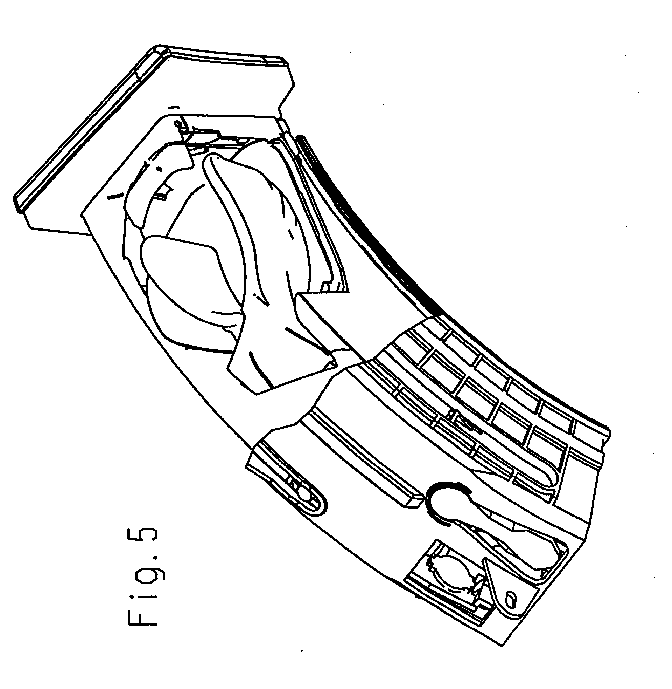

Der in Figur 5 dargestellte, erfindungsgemäße Getränkehalter 10 weist zusätzlich zu der drehbaren Abstützung 34 des in Figuren 1-4 dargestellten Getränkehalters 2 nach oben und zur Seite schwenkbare Abstützungen 54, 56 auf, die nachfolgend erläutert werden. Im übrigen stimmt der in Figur 5 dargestellte Getränkehalter 10 mit demjenigen aus Figuren 1 bis 4 überein und funktioniert in gleicher Weise. Zur Vermeidung von Wiederholungen wird deswegen hinsichtlich Figur 5 insoweit auf die vorstehenden Erläuterungen der Figuren 1 bis 4 verwiesen, für gleiche Bauteile werden übereinstimmende Bezugszeichen verwendet.

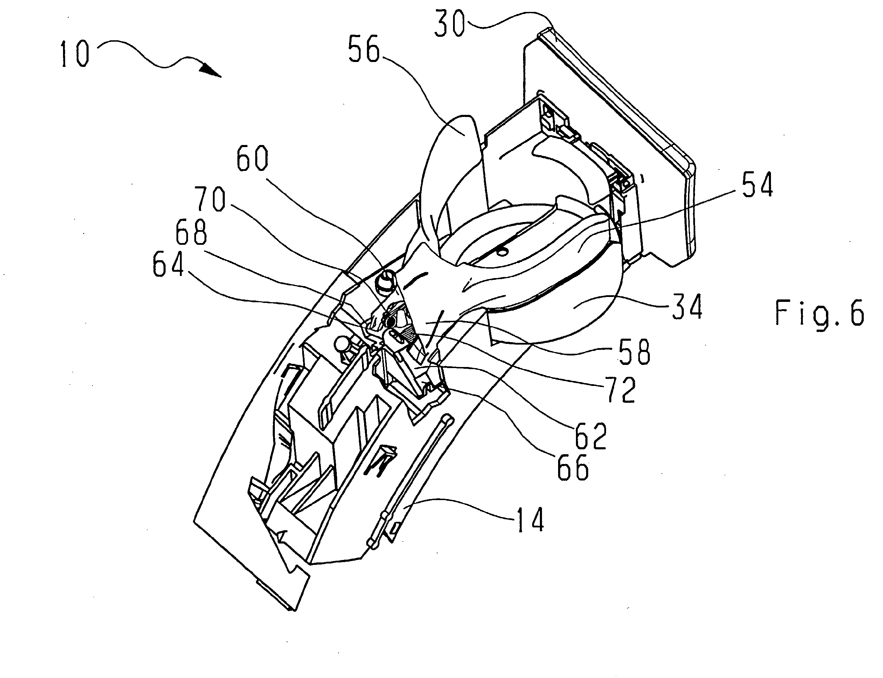

Figur 5 zeigt wie Figur 1 den Auszug 14 in seiner aus dem Gehäuse 12 ausgefahrenen Gebrauchsstellung. Die beiden Abstützungen 54, 56 befinden sich in einer Stützstellung in einem rückwärtigen Bereich der Einstellöffnung 32 oberhalb des Auszugs 14. Die beiden Abstützungen 54, 56 umschließen in der Stützstellung die Einstellöffnung 32 auf etwa 180° in deren rückwärtigem Bereich. Dadurch ist ein nicht dargestellter, in die Einstellöffnung 32 eingestellter Getränkebehälter auch im rückwärtigen Bereich der Einstellöffnung 32 in ausreichender Höhe abgestützt, um ihn kippsicher zu halten. Jede der beiden Abstützungen 54, 56 erstreckt sich über etwa 90° in Umfangsrichtung der Einstellöffnung 32 jeweils in deren linken bzw. rechten, rückwärtigen Bereich. Jede der beiden Abstützungen 54, 56 weist einen mit ihr einstückigen Arm 58, 60 auf, der nach hinten von der jeweiligen Abstützung 54, 56 absteht. An ihren den Abstützungen 54, 56 fernen Enden weisen die Arme 58, 60 eine Schwenkwelle 62, 64 auf, die schwenkbar in Lagerböcken des Auszugs 14 gelagert sind (Figur 6). Gedachte, durch die Schwenkwellen 62, 64 definierte Schwenkachsen der Abstützungen 54, 56 sind schräg so angeordnet, dass die beiden Abstützungen 54, 56 aus der dargestellten Stützstellung in eine nicht dargestellte Nichtstützstellung schräg nach unten und innen in die die Einstellöffnung 32 bildende Aussparung des Auszugs 14 hineinverschwenkbar sind. In der Nichtstützstellung sind die beiden Abstützungen 54, 56 einschließlich ihrer Arme 58, 60 im Auszug 14 versenkt, d.h. sie stehen weder seitlich noch nach oben oder unten über den Auszug 14 vor.

Zum Verschwenken aus der Nichtstützstellung in die Stützstellung weisen die Abstützungen 54, 56 Federelemente auf. Diese Federelemente sind als Torsions-Schenkelfedern 70, 72 ausgebildet und auf die Schwenkwellen 62, 64 der Abstützungen 54, 56 aufgesetzt. Die Schenkelfedern 70, 72 stützen sich am Auszug 14 ab und greifen an den Armen 58, 60 der Abstützungen 54, 56 an. Die Schenkelfedern 70, 72 drücken die Abstützungen 54, 56 nach oben und außen in die Stützstellung.

Beim Einschieben des Auszugs 14 in die Nichtgebrauchsstellung gelangen die Arme 58, 60 der Abstützungen 54, 56 in Anlage an einen Rand 74 des Gehäuses 12 an dessen offener Vorderseite, aus der der Auszug 14 beim Verschieben in die Gebrauchsstellung ausfährt. Beim Einschieben des Auszugs 14 in die Nichtgebrauchsstellung in das Gehäuse 12 gleiten die Arme 58, 60 an dem Rand 74 des Gehäuses 12 entlang und werden vom Rand 74 gegen die Kraft der Schenkelfedern 70, 72 nach unten und innen gedrückt, so dass die Abstützungen 54, 56 in die die Einstellöffnung 32 bildende Aussparung im Auszug 14 hineinverschwenken. Die Abstützungen 54, 56 sind im Auszug 14 versenkt, sie befinden sich in der Nichtstützstellung. Beim Ausfahren des Auszugs 14 in die Gebrauchstellung schwenken die Schenkelfedern 70, 72 die Abstützungen 54, 56 in die Stützstellung. Die Schenkelfedern 70, 72, der Rand 74 des Gehäuses 12, und die mit dem Rand 74 zusammenwirkenden Arme 58, 60 bilden einen mechanischen Antrieb für die Abstützungen 54, 56, der die Abstützungen 54, 56 beim Ausfahren des Auszugs 14 in die Gebrauchsstellung in die Stützstellung und beim Einschieben des Auszugs 14 die Nichtgebrauchsstellung in die Nichtstützstellung bewegen.

Die drehbare Abstützung 34 ist beim Getränkehalter 10 aus Figur 5 niedriger als beim Getränkehalter 10 aus Figur 1, da beim Getränkehalter 10 aus Figur 5 die in die Stützstellung nach oben und außen beweglichen Abstützungen 54, 56 die drehbare Abstützung 34 nach oben verlängern.

## Patentansprüche

1. Getränkehalter, mit einem Auszug, der eine Einstellöffnung zum Einstellen eines Getränkebehälters aufweist, und mit einer Schiebeführung, mit der der Auszug schubladenartig zwischen einer eingeschobenen Nichtgebrauchsstellung und einer ausgefahrenen Gebrauchsstellung hin- und herschiebbar geführt ist, **dadurch gekennzeichnet, dass** die Schiebeführung (12, 14, 16, 18) eine Bogenführung ist, die den Auszug (14) zu Beginn einer Ausfahrbewegung mit großer Vertikalkomponente und gegen Ende der Ausfahrbewegung mit zunehmender Horizontalkomponente verschiebbar führt, und dass der Auszug (14) eine Abstützung (34) mit einer Drehlagerung (36) für einen in die Einstellöffnung (32) eingestellten Getränkebehälter aufweist, deren Drehachse bei ausgefahrenem Auszug (14) in etwa vertikal oder in Ausfahrrichtung nach vorn geneigt ist.

2. Getränkehalter, mit einem Auszug, der eine Einstellöffnung zum Einstellen eines Getränkebehälters aufweist, und mit einer Schiebeführung, mit der der Auszug schubladenartig zwischen einer eingeschobenen Nichtgebrauchsstellung und einer ausgefahrenen Gebrauchsstellung hin- und herschiebbar geführt ist, **dadurch gekennzeichnet, dass** die Schiebeführung (12, 14, 16, 18) eine Bogenführung ist, die den Auszug (14) zu Beginn einer Ausfahrbewegung mit großer Vertikalkomponente und gegen Ende der Ausfahrbewegung mit zunehmender Horizontalkomponente verschiebbar führt, und dass der Auszug (14) eine Abstützung (54, 56) aufweist, die sich in einer Stützstellung in einem rückwärtigen Umfangsbereich der Einstellöffnung (32) und oberhalb des Auszugs (14) befindet und die in einer Nichtstützstellung in den Auszug (14) versenkt ist.

3. Getränkehalter nach Anspruch 2, **dadurch gekennzeichnet, dass** der Auszug (14) eine Abstützung (34) mit einer Drehlagerung (36) für einen in die Einstellöffnung (32) eingestellten Getränkebehälter aufweist, deren Drehachse bei ausgefahrenem Auszug (14) in etwa vertikal oder in Ausfahrrichtung nach vorn geneigt ist.

4. Getränkehalter nach Anspruch 1 oder 2, **dadurch gekennzeichnet, dass** die Schiebeführung (12, 14, 16, 18) eine Kreisbogenführung ist.

5. Getränkehalter nach Anspruch 1, **dadurch gekennzeichnet, dass** der Getränkehalter (10) einen mechanischen Antrieb (38, 42, 44, 46, 48) für die Abstützung (34) aufweist, der seine Bewegung von der Ausfahrbewegung des Auszugs (14) ableitet und der die Abstützung (34) beim Ausfahren und/oder beim Einschieben des Auszugs (14) dreht.

6. Getränkehalter nach Anspruch 5, **dadurch gekennzeichnet, dass** der Antrieb (38, 42, 44, 46, 48) eine Kurvensteuerung (42, 44) aufweist.

7. Getränkehalter nach Anspruch 6, **dadurch gekennzeichnet, dass** der Antrieb (38, 42, 44, 46, 48) einen Schwenkhebel (38) aufweist, der schwenkbar am Auszug (14) gelagert ist, der durch die Kurvensteuerung (42, 44) verschwenkt wird und der eine Verzahnung (46, 48) aufweist, die beim Schwenken des Schwenkhebels (38) die Abstützung (34) dreht.

8. Getränkehalter nach Anspruch 2, **dadurch gekennzeichnet, dass** der Getränkehalter (10) eine Schwenklagerung (62, 64, 66, 68) aufweist, mit der die Abstützung (54, 56) schwenkbar am Auszug (14) gelagert ist.

9. Getränkehalter nach Anspruch 8, **dadurch gekennzeichnet, dass** die Schwenklagerung (62, 64, 66, 68) eine schräg angeordnete Schwenkachse aufweist, so dass sich die Abstützung (54, 56) bei einer Bewegung aus der Nichtstützstellung in die Stützstellung bzgl. des Auszugs (14) schräg nach oben und zur Seite nach außen bewegt.

10. Getränkehalter nach Anspruch 2, **dadurch gekennzeichnet, dass** der Getränkehalter (10) einen mechanischen Antrieb (58, 60, 70, 72, 74) für die Abstützung (54, 56) aufweist, der die Abstützung (54, 56) beim Ausfahren des Auszugs (14) in die Stützstellung und/oder beim Einschieben des Auszugs (14) in die Nichtstützstellung bewegt.

11. Getränkehalter nach Anspruch 2, **dadurch gekennzeichnet, dass** der Auszug (14) zwei Abstützungen (54, 56) aufweist.

12. Getränkehalter, mit einem Auszug, der eine Einstellöffnung zum Einstellen eines Getränkebehälters aufweist, und mit einer Schiebeführung, mit der der Auszug schubladenartig zwischen einer eingeschobenen Nichtgebrauchsstellung und einer ausgefahrenen Gebrauchsstellung hin- und herschiebbar geführt ist, insbesondere nach Anspruch 1, **dadurch gekennzeichnet, dass** die Schiebeführung (12, 14, 16, 18) eine Bogenführung ist, die den Auszug (14) zu Beginn einer Ausfahrbewegung mit großer Vertikalkomponente und gegen Ende der Ausfahrbewegung mit zunehmender Horizontalkomponente verschiebbar führt, und dass der Getränkehalter (10) eine zum Ende der Ausfahrbewegung des Auszugs (14) hin zunehmende Dämpfung der Ausfahrbewegung aufweist.

13. Getränkehalter nach Anspruch 12, **dadurch gekennzeichnet, dass** die Schiebeführung (12, 14, 16, 18) eine Kreisbogenführung ist.

14. Getränkehalter nach Anspruch 12, **dadurch gekennzeichnet, dass** der Getränkehalter (10) ein Dämpferelement (50) aufweist, das erst gegen Ende der Ausfahrbewegung des Auszugs (14) wirksam wird.
